# EUROPEAN PATENT APPLICATION

(11) **EP 4 773 226 A1**
(43) Date of publication of application: **08.07.2026**
(21) Application number: 24878738.4
(22) Date of filing: 05.09.2024
(51) Int. Cl.: H01M 4/36, H01M 4/58, H01M 10/42, H01M 4/13

(54) **POSITIVE ELECTRODE MATERIAL FOR LITHIUM SECONDARY BATTERY AND PREPARATION METHOD THEREFOR, POSITIVE ELECTRODE SHEET, SECONDARY BATTERY AND USE METHOD THEREFOR, AND ELECTRIC DEVICE**

(30) Priority: 16.10.2023 CN 202311335261
(71) Applicant: Contemporary Amperex Technology Co., Limited, Ningde, Fujian 352100 (CN)
(72) Inventor: XIANG, Chengcheng, Ningde, Fujian 352100 (CN); YAO, Bin, Ningde, Fujian 352100 (CN); LIU, Jiang, Ningde, Fujian 352100 (CN); LIU, Xiaomei, Ningde, Fujian 352100 (CN)
(74) Representative: Ziebig Hengelhaupt Intellectual Property Attorneys Patentanwaltskanzlei PartGmbB
(86) International application number: PCT/CN2024/117125
(87) International publication number: WO 2025/082088

(57) **Abstract**

The present application provides a positive electrode material for a lithium secondary battery, a preparation method of the positive electrode material, a positive electrode plate, a secondary battery, a use method of a secondary battery, and a power consuming apparatus. The positive electrode material for a lithium secondary battery of the present application includes a matrix and a modifier disposed on a surface of the matrix. The matrix includes LiₓAₛMn₁₋ₛP_{1-z}C_{z}O₄, where 0<x≤1.1, 0<s≤1, 0≤z≤0.1, A includes one or more elements selected from Ti, V, Zr, Fe, Ni, Mg, Co, Ga, Sn, Sb, Nb, and Ge, and C includes one or more elements selected from B (boron), S, Si, and N. The modifier includes Li_{y}MO_{d}, where 1<y≤6, 1<d≤4, and M includes one or more elements selected from Ni, Co, Fe, Mn, Zn, Mg, Ca, Cu, Sn, Mo, Ru, Ir, V, Nb, and Cr.

## Description

### CROSS-REFERENCE TO RELATED APPLICATIONS

The present application is based on and claims priority to Chinese Patent Application No. 202311335261.4, field on October 16, 2023, of which the content is incorporated herein by reference in its entirety.

### TECHNICAL FIELD

The present application relates to the technical field of lithium batteries, and particularly, relates to a positive electrode material for a lithium secondary battery, a preparation method of a positive electrode material for a lithium secondary battery, a positive electrode plate, a secondary battery and a use method thereof, and a power consuming apparatus.

### BACKGROUND

In recent years, with the application rang of secondary batteries expanding, secondary batteries have been widely used in energy storage power systems such as water power stations, thermal power stations, wind power stations, and solar power stations, and also widely applied to various fields such as electric tools, electric bicycles, electric motorcycles, electric vehicles, military equipment, and aerospace. Since the secondary batteries have achieved great development, higher requirements have been put forward for their performance such as the energy density and cycling performance.

### SUMMARY

The present application is provided in view of the above subject, and is directed to provide a positive electrode material for a lithium secondary battery, a preparation method of the positive electrode material, a positive electrode plate, a secondary battery, a use method of the secondary battery, and a power consuming apparatus. The positive electrode material of the present application has high conductivity, so that the polarization degree of the secondary battery is reduced, the delithiation quantity of the positive electrode material is improved, and the energy density of the secondary battery is improved.

To achieve the above objectives, in a first aspect of the present application, a positive electrode material for a lithium secondary battery is provided, which includes a matrix and a modifier disposed on a surface of the matrix. The matrix includes LiₓAₛMn₁₋ₛP_{1-z}E_{z}O₄, where 0<x≤1.1, 0<s≤1, 0≤z≤0.1, A includes one or more elements of Ti, V, Zr, Fe, Ni, Mg, Co, Ga, Sn, Sb, Nb, and Ge, and E includes one or more elements of B (boron), S, Si, and N. The modifier includes Li_{y}MO_{d}, where 1<y≤6, 1<d≤4, M includes one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

Therefore, according to the present application, the modifier containing a lithium supplement Li_{y}MO_{d} is used, and is disposed on the surface of the matrix containing a positive electrode active material LiₓAₛMn₁₋ₛP_{1-z}E_{z}O₄, so that the distribution uniformity of the lithium supplement in the positive electrode material is improved, the contact area between the lithium supplement and an electrolyte solution is increased, the conductivity of the positive electrode material is improved, the polarization degree of the secondary battery is reduced, the delithiation quantity of the positive electrode material is improved, and the energy density of the secondary battery is improved.

In any one implementation, the positive electrode material for a lithium secondary battery includes a core and a cladding layer cladding the core. The core includes LiₓAₛMn₁₋ₛP_{1-z}E_{z}O₄, where 0<x≤1.1, 0<s≤1, 0≤z≤0.1, A includes one or more elements of Ti, V, Zr, Fe, Ni, Mg, Co, Ga, Sn, Sb, Nb, and Ge, and E includes one or more elements of B (boron), S, Si, and N. The cladding layer includes Li_{y}MO_{d}, where 1<y≤6, 1<d≤4, M includes one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

Therefore, according to the present application, the cladding layer containing the lithium supplement Li_{y}MO_{d} is used and clads the core containing the positive electrode active material LiₓAₛMn₁₋ₛP_{1-z}E_{z}O₄, so that the distribution uniformity of the lithium supplement in the positive electrode material is improved, the contact area between the lithium supplement and the electrolyte solution is increased, the conductivity of the positive electrode material is improved, the polarization degree of the secondary battery is reduced, the delithiation quantity of the positive electrode material is improved, and the energy density of the secondary battery is improved.

In any one implementation, the modifier or the cladding layer includes one or more of Li_{y}MnO₂, Li_{y}NbO₄, Li_{y}FeO₄, Li_{y}CoO₄, Li_{y}NiO₂, Li_{y}CuO₂, and Li_{y}Cuₓ₁Ni_{1-x1-y1}M'_{y1}O₂, where y is respectively and independently greater than 1 but smaller than or equal to 6, 0<x1<1, 0≤y1<0.1, M' includes one or more elements of Zn, Sn, Mg, Fe, and Mn; and optionally, the modifier or the cladding layer includes one or two of Li_{1.8}MnO₂, Li₆CoO₄, Li_{y}NiO₂, and Li₂Cu_{0.6}Ni_{0.4}O₂.

In any one implementation, the matrix or the core includes LiₓDₛ₁Feₛ₂Mn₁₋ₛ₁₋ₛ₂PO₄, where 0<x≤1, s1≥0, s2>0, and 0<s1+s2≤1; D includes one or more elements of Ti, V, Zr, Ni, Mg, Co, Ga, Sn, Sb, Nb, and Ge, and optionally includes one or two elements of Ti and V; and the modifier or the cladding layer includes Li_{y}NiO₂, where 1<y<2.

Therefore, the conductivity of the positive electrode material is improved, the polarization degree is reduced, the delithiation quantity of the positive electrode material is improved, the energy density of the secondary battery is improved, and the cycle life of the secondary battery is prolonged.

In any one implementation, an average diameter of the matrix or the core is 0.7 µm to 12 µm, and is optionally 1 µm to 10 µm; and/or
an average thickness of the modifier or the cladding layer is 10 nm to 30 nm, and is optionally 10 nm to 15 nm.

Therefore, through the above size design, on the one hand, the positive electrode material has high conductivity, and the delithiation quantity of the positive electrode material is improved, so that the energy density of a cell and the first coulombic efficiency of a battery are improved; and on the other hand, some active lithium ions are remained in the lithium supplement, and are gradually released and deintercalated in a subsequent charging and discharging process, so that the lithium supplementation for the positive electrode plate is realized, and the cycle life of the battery is prolonged.

In any one implementation, a mass ratio of Li_{y}MO_{d} to LiₓAₛMn₁₋ₛP_{1-z}E_{z}O₄ is 0.5% to 8%, and is optionally 1% to 5%.

Therefore, the cycle life of the battery is prolonged while the energy density of the cell is improved.

A BET specific surface area of the positive electrode material is 0.9 m²/g to 11.1 m²/g, and is optionally 7 m²/g to 10.7 m²/g.

Therefore, the balance between the first delithiation quantity and the subsequent lithium release quantity is maintained, and the cycle life of the battery is prolonged.

In any one implementation, the modifier or the cladding layer further includes a carbonaceous material, and the carbonaceous material clads a surface of Li_{y}MO_{d}; and/or

the matrix or the core further includes a carbonaceous material, the carbonaceous material clads a surface of LiₓAₛMn₁₋ₛP_{1-z}C_{z}O₄; and/or the carbonaceous material includes one or more of conductive carbon, graphene, and carbon nanotubes.

The conductivity of the positive electrode material is favorably improved.

In a second aspect of the present application, a method for preparing a positive electrode material for a lithium secondary battery is further provided, which is Method 1 or Method 2.

The Method 1 includes:
mixing LiₓAₛMn₁₋ₛP_{1-z}E_{z}O₄ with Li_{y}MO_{d}, and performing roasting to acquire the positive electrode material for a lithium secondary battery.

The Method 2 includes:
mixing LiₓAₛMn₁₋ₛP_{1-z}E_{z}O₄ with any one of a lithium source and an M element source, and performing roasting to acquire an intermediate product; and
mixing the intermediate product with the other one of the lithium source and the M element source, and performing roasting to acquire the positive electrode material for a lithium secondary battery.

The positive electrode material for a lithium secondary battery includes a core and a cladding layer cladding the core. The core includes LiₓAₛMn₁₋ₛP_{1-z}E_{z}O₄, where 0<x≤1.1, 0<s≤1, 0≤z≤0.1, A includes one or more elements of Ti, V, Zr, Fe, Ni, Mg, Co, Ga, Sn, Sb, Nb, and Ge, and E includes one or more elements of B (boron), S, Si, and N. The cladding layer includes Li_{y}MO_{d}, where 1<y≤6, 1<d≤4, M includes one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

Therefore, according to the present application, the cladding layer containing a lithium supplement Li_{y}MO_{d} is used and clads the core containing a positive electrode active material LiₓAₛMn₁₋ₛP_{1-z}E_{z}O₄, so that the distribution uniformity of the lithium supplement in the positive electrode material is improved, the contact area between the lithium supplement and an electrolyte solution is increased, the conductivity of the positive electrode material is improved, the polarization degree is reduced, the delithiation quantity of the positive electrode material is improved, and the energy density of a cell is improved.

In any one implementation, in the Method 1,
a Dv50 particle size of Li_{y}MO_{d} is 8 nm to 25 nm, and is optionally 8 nm to 10 nm; and/or
a Dv50 particle size of LiₓAₛMn₁₋ₛP_{1-z}E_{z}O₄ is 0.1 µm to 10 µm, and is optionally 0.5 µm to 5 µm; and/or
a mass ratio of Li_{y}MO_{d} to LiₓAₛMn₁₋ₛP_{1-z}E_{z}O₄ is 0.5% to 8%, and is optionally 1% to 5%; and/or
a roasting temperature is 400°C to 1200°C, and is optionally 600°C to 1200°C; and/or
a roasting time is 30 h to 65 h; and/or
mixing is performed through a cladding machine, and is performed at a rotating speed of 50 rpm to 400 rpm; and/or
a mixing time is 3 h to 10 h; and/or
the Method 1 further includes: before mixing, cladding Li_{y}MO_{d} and/or LiₓAₛMn₁₋ₛP_{1-z}E_{z}O₄ with a carbonaceous material; and/or
the carbonaceous material includes one or more of conductive carbon, graphene, and carbon nanotubes.
Li_{y}MO_{d} and LiₓAₛMn₁₋ₛP_{1-z}E_{z}O₄ are combined at the above particle size ratio. On the one hand, the rate performance of the material may be regulated and controlled; and on the other hand, the balance between the first delithiation quantity and the subsequent lithium release quantity may be maintained, the introduction of residual alkali is avoided, the energy density of the cell is improved, and the cycle life of the battery is prolonged.

In any one implementation, in the Method 2,
the lithium source includes one or more of lithium hydroxide, lithium oxide, and lithium carbonate; and/or
the M element source includes one or more of a hydroxide, a sulfate, a nitrate, a chloride, and an oxide of the M element; and/or
a roasting temperature is respectively and independently 400°C to 800°C; and/or
a roasting time is respectively and independently 30 h to 65 h; and/or
mixing is performed through a cladding machine, and a rotating speed adopted for mixing is respectively and independently 300 rpm to 400 rpm; and/or
a mixing time is respectively and independently 4 h to 6 h.

In a third aspect of the present application, a positive electrode plate is provided, which includes the positive electrode material in the first aspect of the present application or a positive electrode material prepared by the method in the second aspect of the present application.

In a fourth aspect of the present application, a secondary battery is provided, which includes the positive electrode plate in the third aspect of the present application.

In any one implementation, a charging upper limit voltage of the secondary battery is 3.65 V to 3.85 V; and optionally, a discharging lower limit voltage of the secondary battery is 2.0 V to 2.5 V. Therefore, oxidative decomposition of the electrolyte solution may be reduced, some active lithium ions remained in the lithium supplement may be favorably and gradually deintercalated and released in the subsequent cycle, so that the cycle life of the battery is prolonged.

In a fifth aspect of the present application, a power consuming apparatus is provided, which includes the secondary battery in the fourth aspect of the present application.

In a sixth aspect of the present application, a method of using a secondary battery is provided. According to the method, charging is performed by using an upper limit voltage in a range of 3.65 V to 3.85 V, and optionally, discharging is performed at a lower limit voltage in a range of 2.0 V to 2.5 V; and the secondary battery includes the positive electrode plate in the third aspect of the present application.

### BRIEF DESCRIPTION OF THE DRAWINGS

FIG. 1 is a schematic diagram of a battery cell according to an implementation of the present application;
FIG. 2 is an exploded view of the battery cell according to an implementation of the present application shown in FIG. 1;
FIG. 3 is a schematic diagram of a battery module according to an implementation of the present application;
FIG. 4 is a schematic diagram of a battery pack according to an implementation of the present application;
FIG. 5 is an exploded view of the battery pack according to an implementation of the present application shown in FIG. 4; and
FIG. 6 is a schematic diagram of a power consuming apparatus using a battery cell according to an implementation of the present application as a power source.

Reference numerals:
1: battery pack; 2: upper box; 3: lower box; 4: battery module; 5: battery cell; 51: case; 52: electrode assembly; and 53: top cover assembly.

### DETAILED DESCRIPTION

Implementations of a positive electrode material and a preparation method thereof, a positive electrode plate, a battery, a use method of a battery, a battery module, a battery pack, and a power consuming apparatus of the present application are illustrated in detail and specifically disclosed hereafter properly with reference to the accompanying drawings. However, there may be situations where unnecessary detailed illustrations are omitted. For example, there are situations where detailed illustrations of well-known matters and repeated illustrations of actually the same structure are omitted. Thus, the following illustrations do not become unnecessarily lengthy, which facilitates understanding by those skilled in the art. In addition, the accompanying drawings and following illustrations are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. The range defined in this way may include or exclude end values, and may be arbitrarily combined, that is, any one lower limit may be combined with any one upper limit to form a range. For example, if ranges of 60 to 120 and 80 to 110 are listed for a particular parameter, it is to be understood that ranges of 60 to 110 and 80 to 120 are also expected. Additionally, if minimum range values 1 and 2 and maximum range values 3, 4, and 5 are listed, the following ranges are all expected: 1 to 3, 1 to 4, 1 to 5, 2 to 3, 2 to 4, and 2 to 5. In the present application, unless otherwise specified, the numerical range "a to b" represents the abbreviated representation of any combination of real numbers between a and b, and both a and b are real numbers. For example, the numerical range "0 to 5" represents that all real numbers between 0 and 5 are listed herein, and "0 to 5" is merely the abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, and the like.

Unless otherwise specified, all the implementations and optional implementations of the present application may be combined with each other to form new technical solutions.

Unless otherwise specified, all technical features and optional technical features of the present application may be combined with each other to form new technical solutions.

Unless otherwise specified, all steps in the present application may be performed in order or may be performed in a random order, and are preferably performed in order. For example, the description that the method includes steps (a) and (b) represents that the method may include steps (a) and (b) performed sequentially, or may include steps (b) and (a) performed sequentially. For example, the description that the method may further include step (c) represents that step (c) may be added to the method in any order, for example, the method may include steps (a), (b) and (c), or steps (a), (c) and (b), or steps (c), (a) and (b), and the like.

### [Battery cell]

A battery cell is also referred to as a rechargeable battery or a storage battery, and refers to a battery capable of being continually used by activating an active material in a charging manner after the battery is discharged.

Generally, the battery cell includes a positive electrode plate, a negative electrode plate, a separator, and an electrolyte solution. In a charging and discharging process of the battery, active ions (for example, lithium ions) are intercalated and deintercalated back and forth between the positive electrode plate and the negative electrode plate. The separator is disposed between the positive electrode plate and the negative electrode plate to mainly play a role of preventing short circuit between a positive electrode and a negative electrode and allowing active ions to pass through at the same time. The electrolyte solution is between the positive electrode plate and the negative electrode plate, and mainly achieves an active ion conducting effect.

### [Positive electrode material]

An implementation of the present application provides a positive electrode material for a lithium secondary battery, which includes a matrix and a modifier disposed on a surface of the matrix. The matrix includes LiₓAₛMn₁₋ₛP_{1-z}E_{z}O₄, where 0<x≤1.1, 0<s≤1, 0≤z≤0.1, A includes one or more elements of Ti, V, Zr, Fe, Ni, Mg, Co, Ga, Sn, Sb, Nb, and Ge, and E includes one or more elements of B (boron), S, Si, and N. The modifier includes Li_{y}MO_{d}, where 1<y≤6, 1<d≤4, M includes one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

In the prior art, the positive electrode material is generally prepared by mixing a lithium supplement and a positive electrode active material. However, the prepared positive electrode material has the defects of poor conductivity, easy polarization in the charging and discharging process, low energy density of a cell, and the like.

Although the mechanism is unclear, the applicant unexpectedly discovered that according to the present application, the modifier containing a lithium supplement Li_{y}MO_{d} is used, and is disposed on the surface of the matrix containing a positive electrode active material LiₓAₛMn₁₋ₛP_{1-z}E_{z}O₄, so that the distribution uniformity of the lithium supplement in the positive electrode material is improved, the contact area between the lithium supplement and an electrolyte solution is increased, the conductivity of the positive electrode material is improved, the polarization degree of the secondary battery is reduced, the delithiation quantity of the positive electrode material is improved, and the energy density of the secondary battery is improved.

In any one implementation, the positive electrode material for a lithium secondary battery includes a core and a cladding layer cladding the core. The core includes LiₓAₛMn₁₋ₛP_{1-z}E_{z}O₄, where 0<x≤1.1, for example, x is 0.1, 0.2, 0.4, 0.5, 0.7, 0.8, 0.9, 1, 1.1, or in a range formed by any of the above values, 0<s≤1, for example, s is 0.1, 0.2, 0.4, 0.5, 0.7, 0.8, 0.9, 1, or in a range formed by any of the above values, 0≤z≤0.1, for example, z is 0, 0.01, 0.03, 0.05, 0.07, 0.08, 0.09, 0.1, or in a range formed by any of the above values, A includes one or more elements of Ti, V, Zr, Fe, Ni, Mg, Co, Ga, Sn, Sb, Nb, and Ge, and E includes one or more elements of B (boron), S, Si, and N. The cladding layer includes Li_{y}MO_{d}, where 1<y≤6, y is, for example, 1.1, 1.2, 1.5, 1.8, 2, 3, 4, 5, 6, or in a range formed by any of the above values, 1<d≤4, for example, d is 1.1, 1.3, 1.5, 1.7, 2, 3, 4, or in a range formed by any of the above values, M includes one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

Although the mechanism is unclear, the applicant unexpectedly discovered that according to the present application, the cladding layer containing the lithium supplement Li_{y}MO_{d} is used and clads the core containing the positive electrode active material LiₓAₛMn₁₋ₛP_{1-z}E_{z}O₄, so that the distribution uniformity of the lithium supplement in the positive electrode material is improved, the contact area between the lithium supplement and the electrolyte solution is increased, the conductivity of the positive electrode material is improved, the polarization degree of the secondary battery is reduced, the delithiation quantity of the positive electrode material is improved, and the energy density of the secondary battery is improved.

In some implementations, the modifier or the cladding layer includes one or more of Li_{y}MnO₂, Li_{y}NbO₄, Li_{y}FeO₄, Li_{y}CoO₄, Li_{y}NiO₂, Li_{y}CuO₂, and Li_{y}Cuₓ₁Ni_{1-x1-y1}M'_{y1}O₂, where y is respectively and independently greater than 1 but smaller than or equal to 6, 0<x1<1, 0≤y1<0.1, M' includes one or more elements of Zn, Sn, Mg, Fe, and Mn; and optionally, the modifier or the cladding layer includes one or two of Li_{1.8}MnO₂, Li₆CoO₄, Li_{y}NiO₂, and Li₂Cu_{0.6}Ni_{0.4}O₂.

In some implementations, the matrix or the core includes LiₓDₛ₁Feₛ₂Mn₁₋ₛ₁₋ₛ₂PO₄, where 0<x≤1, for example, x is 0.1, 0.2, 0.4, 0.5, 0.7, 0.8, 0.9, 1, or in a range formed by any of the above values; s1≥0, s2>0, 0<s1+s2≤1, and s1+s2, for example, is 0.1, 0.2, 0.4, 0.5, 0.7, 0.8, 0.9, 1, or in a range formed by any of the above values; D includes one or more elements of Ti, V, Zr, Ni, Mg, Co, Ga, Sn, Sb, Nb, and Ge, and optionally includes one or two elements of Ti and V. The modifier or the cladding layer includes Li_{y}NiO₂, where 1<y<2, and y, for example, is 1.1, 1.2, 1.5, 1.8, or in a range formed by any of the above values.

Therefore, the distribution uniformity of the lithium supplement in the positive electrode material is improved, the contact area between the lithium supplement and the electrolyte solution is increased, the conductivity of the positive electrode material is improved, the polarization degree is reduced, the delithiation quantity of the positive electrode material is improved, and the energy density of the cell is improved.

In some implementations, an average diameter of the matrix or the core is 0.7 µm to 12 µm, and is optionally 1 µm to 10 µm, for example, 0.7 µm, 1 µm, 2 µm, 3 µm, 4 µm, 5 µm, 6 µm, 7 µm, 8 µm, 9 µm, 10 µm, 11 µm, 12 µm, or in a range formed by any of the above values; and/or an average thickness of the modifier or the cladding layer is 10 nm to 30 nm, and is optionally 10 nm to 15 nm, for example, 1 nm, 5 nm, 10 nm, 15 nm, 20 nm, 25 nm, 30 nm, or in a range formed by any of the above values.

Therefore, through the above size design, on the one hand, the positive electrode material has high conductivity, and the delithiation quantity of the positive electrode material is improved, so that the energy density of a cell and the first coulombic efficiency of a battery are improved; and on the other hand, some active lithium ions are remained in the lithium supplement, and are gradually deintercalated and released in a subsequent charging and discharging process, so that the lithium supplementation for the positive electrode plate is realized, and the cycle life of the battery is prolonged.

In the present invention, the average diameter of the core and the average thickness of the cladding layer are tested by using conventional methods in the art. For example, the positive electrode material is tested by using TEM. The core and the cladding layer of a single material particle have different crystal lattices under the TEM, so that interfaces of the core and the cladding layer may be observed. In combination with mapping (software of the TEM), a diameter of the core and a thickness of the cladding layer of the single material particle are measured, and a plurality of material particles (for example, 50 to 60 material particles) are totally measured, and an average value of the diameters of the cores and an average value of the thicknesses of the cladding layers of all the material particles are calculated to acquire the average diameter of the core and the average thickness of the cladding layer.

In the present invention, "cladding" may be partial cladding or complete cladding. "Partial cladding" refers to that the cladding layer clads partial surface of the core. "Complete cladding" refers to that the cladding layer clads the whole surface of the core.

In some implementations, a mass ratio of Li_{y}MO_{d} (for example, Li_{y}NiO₂) to LiₓAₛMn₁₋ₛP_{1-z}E_{z}O₄ (for example, LiₓFePO₄) is 0.5% to 8%, and is optionally 1% to 5%, for example, 0.5%, 1%, 2%, 3%, 4%, 5%, 6%, 7%, 8%, or in a range formed by any of the above values.

Therefore, the cycle life of the battery is prolonged while the energy density of the cell is improved.

In some implementations, a BET specific surface area of the positive electrode material is 0.9 m²/g to 11.1 m²/g, and is optionally 7 m²/g to 10.7 m²/g, for example, 0.9 m²/g, 1.0 m²/g, 2.0 m²/g, 3.0 m²/g, 4.0 m²/g, 5.0 m²/g, 6.0 m²/g, 7.0 m²/g, 8.0 m²/g, 9.0 m²/g, 10.0 m²/g, 11.0 m²/g, or in a range formed by any of the above values.

Therefore, the balance between the first delithiation quantity and the subsequent lithium release quantity is maintained, and the cycle life of the battery is prolonged.

In the present application, the BET specific surface area of the positive electrode material is tested by using a conventional method in the art. For example, the test is performed with reference to the standard GB/T19587-2004, *Determination of The Specific Surface Area of Solids By Gas Adsorption Using The BET Method*. Specifically, a sample to be tested is charged into a sample tube, and an initial mass of the sample to be tested is recorded. The sample to be tested is charged into a specific surface area analyzer, degassing is started, the sample to be tested is heated to 200°C and kept for 2 h, and then, a mass of the sample to be tested after degassing is recorded. Then, the sample to be tested after degassing is charged into a device again, and liquid nitrogen is poured into the device for BET test. A nitrogen gas pressure is set to 0.08 MPa to 0.12 MPa. After the test is completed, the BET specific surface area is calculated from a test result.

In some implementations of the present application, the surfaces of LiₓAₛMn₁₋ₛP_{1-z}C_{z}O₄ and Li_{y}MO_{d} may be independently cladded with other materials, for example, a carbonaceous material.

In some implementations, the modifier or the cladding layer further includes a carbonaceous material, and the carbonaceous material clads the surface of Li_{y}MO_{d}; and/or
the matrix or the core further includes a carbonaceous material, the carbonaceous material clads the surface of LiₓAₛMn₁₋ₛP_{1-z}C_{z}O₄; and/or the carbonaceous material includes one or more of conductive carbon, graphene, and carbon nanotubes.

The conductivity of the positive electrode material is favorably improved.

### [Method for preparing positive electrode material]

An implementation of the present application provides a method for preparing a positive electrode material for a lithium secondary battery, and the method is Method 1 or Method 2.

The Method 1 includes:
mix LiₓAₛMn₁₋ₛP_{1-z}E_{z}O₄ (for example, LiₓFePO₄) with Li_{y}MO_{d} (for example, Li_{y}NiO₂), and perform roasting to acquire the positive electrode material for a lithium secondary battery.

The Method 2 includes:
mix LiₓAₛMn₁₋ₛP_{1-z}E_{z}O₄ (for example, LiₓFePO₄) with any one of a lithium source and an M element source (for example, a nickel source), and perform roasting to acquire an intermediate product; and
mix the intermediate product with the other one of the lithium source and the M element source (for example, the nickel source), and perform roasting to acquire the positive electrode material for a lithium secondary battery.

The positive electrode material for a lithium secondary battery includes a core and a cladding layer cladding the core. The core includes LiₓAₛMn₁₋ₛP_{1-z}E_{z}O₄, where 0<x≤1.1, 0<s≤1, 0≤z≤0.1, A includes one or more elements of Ti, V, Zr, Fe, Ni, Mg, Co, Ga, Sn, Sb, Nb, and Ge, and E includes one or more elements of B (boron), S, Si, and N. The cladding layer includes Li_{y}MO_{d}, where 1<y≤6, 1<d≤4, M includes one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

Optionally, the core includes LiₓFePO₄, where 0<x≤1, and for example, x is 0.1, 0.2, 0.4, 0.5, 0.7, 0.8, 0.9, 1, or in a range formed by any of the above values. The cladding layer includes Li_{y}NiO₂, where 1<y<2, and y, for example, is 1.1, 1.2, 1.5, 1.8, or in a range formed by any of the above values.

Therefore, according to the present application, the cladding layer containing a lithium supplement Li_{y}MO_{d} is used and clads the core containing a positive electrode active material LiₓAₛMn₁₋ₛP_{1-z}E_{z}O₄, so that the distribution uniformity of the lithium supplement in the positive electrode material is improved, the contact area between the lithium supplement and an electrolyte solution is increased, the conductivity of the positive electrode material is improved, the polarization degree is reduced, the delithiation quantity of the positive electrode material is improved, and the energy density of a cell is improved.

In some implementations, in the Method 1,
a Dv50 particle size of Li_{y}MO_{d} (for example, Li_{y}NiO₂) is 8 nm to 25 nm, and is optionally 8 nm to 10 nm, for example, 8 µm, 9 µm, 10 µm, 11 µm, 12 µm, 15 µm, 16 µm, 17 µm, 18 µm, 20 µm, 22 µm, 23 µm, 24 µm, 25 µm; and/or
a Dv50 particle size of LiₓAₛMn₁₋ₛP_{1-z}E_{z}O₄ (for example, LiₓFePO₄) is 0.1 µm to 10 µm, and is optionally 0.5 µm to 5 µm, for example, 0.5 µm, 1 µm, 2 µm, 3 µm, 4 µm, 5 µm, or in a range formed by any of the above values; and/or
a mass ratio of Li_{y}MO_{d} (for example, Li_{y}NiO₂) to LiₓAₛMn₁₋ₛP_{1-z}E_{z}O₄ for example, LiₓFePO₄) is 0.5% to 8%, and is optionally 1% to 5%, for example, 0.5%, 1%, 2%, 3%, 4%, 5%, 6%, 7%, 8%, or in a range formed by any of the above values; and/or
a roasting temperature is 400°C to 1200°C, and is optionally 600°C to 1200°C, for example, 400°C, 500°C, 600°C, 700°C, 800°C, 900°C, 1000°C, 1100°C, 1200°C, or in a range formed by any of the above values; and/or
a roasting time is 30 h to 65 h, for example, 30 h, 35 h, 40 h, 45 h, 50 h, 55 h, 60 h, 65 h, or in a range formed by any of the above values; and/or
mixing is performed through a cladding machine, and is performed at a rotating speed of 50 rpm to 400 rpm, for example, 50 rpm, 100 rpm, 150 rpm, 200 rpm, 250 rpm, 300 rpm, 350 rpm, 400 rpm, or in a range formed by any of the above values; and/or
a mixing time is 3 h to 10 h, for example, 3 h, 4 h, 5 h, 6 h, 7 h, 8 h, 9 h, 10 h, or in a range formed by any of the above values; and/or
the Method 1 further includes: before mixing, clad Li_{y}MO_{d} (for example, Li_{y}NiO₂) and/or LixAₛMn₁₋ₛP_{1-z}E_{z}O₄ with carbon (for example, conductive carbon).

Therefore, Li_{y}MO_{d} and LiₓAₛMn₁₋ₛP_{1-z}E_{z}O₄ are combined at the above particle size ratio. On the one hand, the rate performance of the material may be regulated and controlled; and on the other hand, the balance between the first delithiation quantity and the subsequent lithium release quantity may be maintained, the introduction of residual alkali is avoided, the energy density of the cell is improved, and the cycle life of the battery is prolonged.

In the present invention, the "Dv50 particle size" refers to the particle size when a material accumulated volume distribution percentage reaches 50%. The Dv50 particle size is tested by using a conventional method in the art. For example, according to GB/T 19077-2016 *Particle Size Distribution-Laser Diffraction Methods*, determination is performed by using a Mastersizer 2000E laser particle size analyzer of Malvern Instruments Co., Ltd, UK.

In some implementations, in the Method 2,
the lithium source includes one or more of lithium hydroxide, lithium oxide, and lithium carbonate; and/or
the M element source includes one or more of a hydroxide, a sulfate, a nitrate, a chloride, and an oxide of the M element; and/or
a roasting temperature is respectively and independently 400°C to 800°C, for example, 400°C, 500°C, 600°C, 700°C, 800°C, or in a range formed by any of the above values; and/or
a roasting time is respectively and independently 30 h to 65 h, for example, 30 h, 35 h, 40 h, 45 h, 50 h, 55 h, 60 h, 65 h, or in a range formed by any of the above values; and/or
mixing is performed through a cladding machine, and a rotating speed adopted for mixing is respectively and independently 300 rpm to 400 rpm, for example, 300 rpm, 350 rpm, 400 rpm, or in a range formed by any of the above values; and/or
a mixing time is respectively and independently 4 h to 6 h, for example, 4 h, 4.5 h, 5 h, 5.5 h, 6 h, or in a range formed by any of the above values.

### [Positive electrode plate]

A positive electrode plate generally includes a positive electrode current collector and a positive electrode film layer disposed on at least one surface of the positive electrode current collector. The positive electrode film layer includes the positive electrode material described above or a positive electrode material prepared by the above method.

In the charging and discharging process of a battery, deintercalation and consumption of Li may occur. Molar contents of Li are different when the battery is discharged to different states. In a list of positive electrode materials in the present application, the molar content of Li is in an initial state of the material, that is, a state before the material is delivered. The positive electrode material is applied to a battery system, and the molar content of Li changes after a charging-discharging cycle.

In the list of the positive electrode materials in the present application, a molar content of O is merely a theoretical state value. Oxygen release by crystal lattices may cause the change of the molar content of O, and an actual molar content of O may float.

As an example, the positive electrode current collector has two opposite surfaces in a thickness direction thereof, and the positive electrode film layer is disposed on either or both of the two opposite surfaces of the positive electrode current collector.

In some implementations, the positive electrode current collector may use a metal foil or a composite current collector. For example, an aluminum foil may be used as the metal foil. The composite current collector may include a high-molecular material substrate layer and a metal layer formed on at least one surface of the high-molecular material substrate layer. The composite current collector may be formed by forming a metal material (aluminum, aluminum alloy, nickel, nickel alloy, titanium, titanium alloy, silver, silver alloy, and the like) on a high-molecular material substrate (for example, a substrate of polypropylene (PP), polyethylene terephthalate (PET), polybutylene terephthalate (PBT), polystyrene (PS), polyethylene (PE), and the like).

In some implementations, the positive electrode material may further use a positive electrode material used for batteries well known in the art. As an example, the positive electrode material may include at least one of the following materials: lithium-containing phosphate of an olivine structure, lithium transition metal oxides, and respective modified compounds thereof. However, the present application is not limited to such materials, and other conventional materials capable of being used as a positive electrode active material for batteries may also be used. Only one or a combination of two or more of these positive electrode active materials may be used. Examples of the lithium transition metal oxide may include but are not limited to at least one of a lithium-cobalt oxide (for example, LiCoO₂), a lithium-manganese oxide (for example, LiMnO₂ and LiMn₂O₄), a lithium-nickel-cobalt oxide, a lithium-manganese-cobalt oxide, a lithium-nickel-manganese oxide, a lithium-nickel-cobalt-manganese oxide (for example, LiNi_{1/3}Co_{1/3}Mn_{1/3}O₂ (may also be referred to as NCM₃₃₃ for short), LiNi_{0.5}Co_{0.2}Mn_{0.3}O₂ (may also be referred to as NCM₅₂₃ for short), LiNi_{0.5}Co_{0.25}Mn_{0.25}O₂ (may also be referred to as NCM₂₁₁ for short), LiNi_{0.6}Co_{0.2}Mn_{0.2}O₂ (may also be referred to as NCM₆₂₂ for short), LiNi_{0.8}Co_{0.1}Mn_{0.1}O₂ (may also be referred to as NCM₈₁₁ for short), a lithium-nickel-cobalt-aluminum oxide (for example, LiNi_{0.85}Co_{0.15}Al_{0.05}O₂), and modified compounds thereof, and the like. Examples of the lithium-containing phosphate of the olivine structure may include but are not limited to at least one of a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some implementations, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylic resin.

In some implementations, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared by the following method: disperse the above components for preparing the positive electrode plate, for example, the positive electrode material, the conductive agent, the binder, and any other components in a solvent (for example, N-methylpyrrolidone) to form positive electrode slurry; and coat the positive electrode current collector with the positive electrode slurry, perform working procedures such as drying and cold pressing, and then obtain the positive electrode plate.

### [Method of using battery cell]

An implementation of the present application provides a method of using a battery. According to the method, charging is performed at an upper limit voltage in a range of 3.65 V to 3.85 V (for example, 3.65 V, 3.68 V, 3.7 V, 3.73 V, 3.75 V, 3.8 V, 3.82 V, or in a range formed by any of the above values), and discharging is performed at a lower limit voltage in a range of 2.0 V to 2.5 V (for example, 2.1 V, 2.2 V, 2.3 V, 2.4 V, or in a range formed by any of the above values). The battery includes the positive electrode material described above, a positive electrode material prepared by the above method, or the positive electrode plate described above.

Therefore, oxidative decomposition of the electrolyte solution may be reduced, some active lithium ions remained in the lithium supplement may be favorably and gradually deintercalated and released in the subsequent cycle, so that the cycle life of the battery is prolonged.

In some implementations, the charging upper limit voltage is also referred to as a charging cut-off voltage, and the discharging lower limit voltage is also referred to as a discharging cut-off voltage.

### [Negative electrode plate]

A negative electrode plate includes a negative electrode current collector and a negative electrode film layer disposed on at least one surface of the negative electrode current collector. The negative electrode film layer includes a negative electrode active material.

As an example, the negative electrode current collector has two opposite surfaces in a thickness direction thereof, and the negative electrode film layer is disposed on either or both of the two opposite surfaces of the negative electrode current collector.

In some implementations, the negative electrode current collector may use a metal foil or a composite current collector. For example, a copper foil may be used as the metal foil. The composite current collector may include a high-molecular material substrate layer and a metal layer formed on at least one surface of a high-molecular material substrate. The composite current collector may be formed by forming a metal material (copper, copper alloy, nickel, nickel alloy, titanium, titanium alloy, silver, silver alloy, and the like) on the high-molecular material substrate (for example, a substrate of polypropylene (PP), polyethylene terephthalate (PET), polybutylene terephthalate (PBT), polystyrene (PS), polyethylene (PE), and the like).

In some implementations, the negative electrode active material may use a negative electrode active material used for batteries well known in the art. As an example, the negative electrode active material may include at least one of the following materials: artificial graphite, natural graphite, soft carbon, hard carbon, a silicon-based material, a tin-based material, lithium titanate, and the like. The silicon-based material may be at least one selected from monatomic silicon, a silicon oxide compound, a silicon-carbon composite, a silicon-nitrogen composite, and silicon alloy. The tin-based material may be at least one selected from monatomic tin, a tin oxide compound, and tin alloy. However, the present application is not limited to such materials, and other conventional materials capable of being used as a negative electrode active material for batteries may also be used. Only one or a combination of two or more of these negative electrode active materials may be used.

In some implementations, the negative electrode film layer further optionally includes a binder. As an example, the binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethylacrylic acid (PMAA), and carboxymethyl chitosan (CMCS).

In some implementations, the negative electrode film layer further optionally includes a conductive agent. As an example, the conductive agent may be at least one selected from superconducting carbon, acetylene black, carbon black, Ketjen black, carbon dots, carbon nanotubes, graphene, and carbon nanofibers.

In some implementations, the negative electrode film layer further optionally includes another adjuvant, such as a thickener (for example, sodium carboxymethyl cellulose (CMC-Na)).

In some implementations, the negative electrode plate may be prepared by the following method: disperse the above components for preparing the negative electrode plate, for example, the negative electrode active material, the conductive agent, the binder, and any other components in a solvent (for example, deionized water) to form negative electrode slurry; and coat the negative electrode current collector with the negative electrode slurry, perform working procedures such as drying and cold pressing, and then obtain the negative electrode plate.

### [Electrolyte]

An electrolyte achieves an ion conducting effect between the positive electrode plate and the negative electrode plate. A type of the electrolyte is not specifically limited in the present application, and it may be selected according to demands. For example, the electrolyte may be in a liquid sate, a gel state, or an all-solid state.

In some implementations, the electrolyte is in a liquid state, and includes an electrolyte salt and a solvent.

In some implementations, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro(oxalato)borate, lithium bis(oxalato)borate, lithium difluorobis(oxalato)phosphate, and lithium tetrafluoro(oxalato)phosphate.

In some implementations, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte solution further optionally includes an additive. As an example, the additive may include a negative electrode film-forming additive and a positive electrode film-forming additive, and may further include an additive capable of improving some properties of the battery, for example, an additive capable of improving the overcharging property of the battery, an additive capable of improving the high-temperature or low-temperature property of the battery, and the like.

### [Separator]

In some implementations, the battery cell further includes a separator. A type of the separator is not particularly limited in the present application, and any well-known separator of a porous structure having good chemical stability and mechanical stability may be selected and used.

In some implementations, a material of the separator may be at least one selected from glass fiber, non-woven fabric, polyethylene, polypropylene, and polyvinylidene fluoride. The separator may be a single-layer film or a multilayer composite film without particular limitation. In a case that the separator is a multilayer composite film, materials of each layer may be the same or different without particular limitation.

In some implementations, the positive electrode plate, the negative electrode plate, and the separator may be made into an electrode assembly by a winding process or a laminating process.

In some implementations, the battery cell may include an outer packaging. The outer packaging may be used for encapsulating the electrode assembly and the electrolyte.

In some implementations, the outer packaging of the battery cell may be a hard shell, such as a hard plastic shell, an aluminum shell, or a steel shell. The outer packaging of the battery cell may also be a soft packaging, such as a bag-type soft packaging. A material of the soft packaging may be plastics, and examples of the plastics may include polypropylene, polybutylene terephthalate, polybutylene succinate, and the like.

In some implementations, the charging upper limit voltage (also referred to as a charging cut-off voltage) of the battery is 3.65 V to 3.85 V, for example, 3.65 V, 3.68 V, 3.7 V, 3.73 V, 3.75 V, 3.8 V, 3.82 V, or in a range formed by any of the above values. Optionally, the discharging lower limit voltage (also referred to as a discharging cut-off voltage) of the battery is 2.0 V to 2.5 V, for example, 2.1 V, 2.2 V, 2.3 V, 2.4 V, or in a range formed by any of the above values.

Therefore, oxidative decomposition of the electrolyte solution may be reduced, some active lithium ions remained in the lithium supplement may be favorably and gradually deintercalated and released in the subsequent cycle, so that the cycle life of the battery is prolonged.

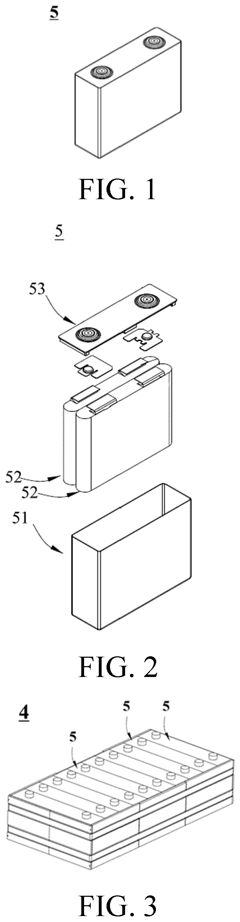

A shape of the battery cell is not particularly limited in the present application, and the battery may be in a cylindrical shape, a square shape, or any other shape. For example, FIG. 1 shows a battery cell 5 of a square structure as an example.

In some implementations, referring to FIG. 2, the outer packaging may include a case 51 and a cover plate 53. The case 51 may include a bottom plate and a side plate connected to the bottom plate, and the bottom plate and the side plate are enclosed to form an accommodating cavity. The case 51 is provided an opening communicating with the accommodating cavity, and the cover plate 53 may cover the opening to close the accommodating cavity. The positive electrode plate, the negative electrode plate, and the separator may be made to form an electrode assembly 52 by a winding process or a laminating process. The electrode assembly 52 is encapsulated in the accommodating cavity. An electrolyte solution infiltrates into the electrode assembly 52. The quantity of the electrode assembly 52 included in the battery cell 5 may be one or more, and it may be selected by those skilled in the art according to specific practical demands.

In some implementations, the battery cell may be assembled into a battery module. The quantity of the battery cell included by the battery module may be one or more, and the specific quantity may be selected by those skilled in the art according to the application and capacity of the battery module.

FIG. 3 shows a battery module 4 as an example. Referring to FIG. 3, in the battery module 4, a plurality of battery cells 5 may be sequentially arranged in a length direction of the battery module 4. Of course, the battery cells may also be arranged in any other manners. The plurality of battery cells 5 may further be fixed through fasteners.

Optionally, the battery module 4 may further include a shell with an accommodating space, and the plurality of battery cells 5 are accumulated in the accommodating space.

In some implementations, the battery module may further be assembled into a battery pack, the quantity of battery module included in the battery pack may be one or more, and the specific quantity may be selected by those skilled in the art according to the application and capacity of the battery pack.

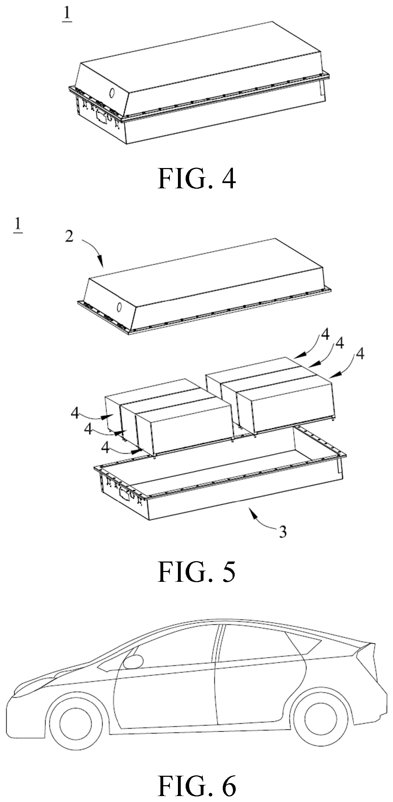

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 may cover the lower box 3 to form a closed space for accommodating the battery modules 4. The plurality of battery modules 4 may be arranged in the battery box in any manner.

In addition, the present application further provides a power consuming apparatus. The power consuming apparatus includes at least one of the battery cell, the battery module, or the battery pack provided in the present application. The battery cell, the battery module, or the battery pack may be used as a power source of the power consuming apparatus, and may also be used as an energy storage unit of the power consuming apparatus. The power consuming apparatus may include but is not limited to a mobile device (for example, a mobile phone or a laptop), an electric vehicle (for example, an all-electric vehicle, a hybrid electric vehicle, a plug-in hybrid electric vehicle, an electric bicycle, an electric scooter, an electric golf cart, an electric truck, and the like), an electric train, a ship, a satellite, an energy storage system, and the like.

The battery cell, the battery module, or the battery pack may be selected according to use requirements of the power consuming apparatus.

FIG. 6 shows a power consuming apparatus as an example. The power consuming apparatus is an all-electric vehicle, a hybrid electric vehicle, or a plug-in hybrid electric vehicle, and the like To meet the requirements of the power consuming apparatus on high power and high energy density of the battery cell, the battery pack or the battery module may be used.

### [Embodiments]

Embodiments of the present application will be described hereinafter. The embodiments described below are exemplary, and are merely intended to explain the present application but cannot be construed as a limitation to the present application. If no specific techniques or conditions are specified in the embodiments, the techniques or conditions described in the literatures in the art or in accordance with the product specification shall be followed. The reagents or instruments used without manufacturer indicated are all commercially available conventional products.

### Embodiment 1

(1) Preparation of positive electrode material:
   A lithium supplement Li_{1.8}NiO₂ with a volume average particle size Dv50 of 8 µm and a BET specific surface area of 0.55 m²/g was pulverized for 5 h to 8 h by using a high-speed pulverizer at a rotating speed of 700 rpm to 800 rpm to acquire particles with a volume average particle size Dv50 of 8 nm to 10 nm; and LiFePO₄ with a volume average particle size Dv50 of 2 µm and a BET specific surface area of 10.5 m²/g and the pulverized lithium supplement were put into a cladding machine to be uniformly mixed for 2 h to 3 h at a rotating speed of 300 rpm to 400 rpm, a mass ratio of the lithium supplement to a positive electrode active material was 2%, roasting was performed at 600°C to 1200°C for 30 h to 65 h, and the positive electrode material was acquired.
(2) Preparation of positive electrode plate: the positive electrode material, a conductive agent acetylene black, a binder PVDF (polyvinylidene fluoride) were mixed according to a weight ratio of 97:1:2, a solvent N-methylpyrrolidone was added, the mixture was sufficiently stirred and uniformly mixed to acquire a positive electrode slurry, the positive electrode slurry was then coated onto a surface of a positive electrode current collector aluminum foil, and drying and cold pressing were performed to acquire the positive electrode plate.
(3) Preparation of negative electrode plate: graphene, a conductive agent acetylene black, sodium carboxymethyl cellulose, and styrene-butadiene rubber were mixed according to a weight ratio of 96:1:1:2, a solvent water was added, the mixture was sufficiently stirred and uniformly mixed to acquire a negative electrode slurry, and the negative electrode slurry was then coated onto a surface of a negative electrode current collector copper foil, and drying and cold pressing were performed to acquire the negative electrode plate.
(4) Separator: a polypropylene film was used.
(5) Preparation of electrolyte solution: ethylene carbonate (EC), ethyl methyl carbonate (EMC), and diethyl carbonate (DEC) were mixed according to a volume ratio of 1:1:1, then, LiPF₆ was uniformly dissolved into the above solution to acquire the electrolyte solution. In the electrolyte solution, the concentration of LiPF₆ was 1 mol/L.
(6) Preparation of secondary battery: the positive electrode plate, the separator, and the negative electrode plate were sequentially stacked and wound to acquire an electrode assembly; and the electrode assembly was put into an outer packing, the above prepared electrolyte solution was added, and work procedures such as encapsulation, still standing, formation, and aging were performed to acquire the secondary battery.

Embodiments 2 to 26 and Comparative examples 1 to 2 have similar preparation methods of the secondary battery as Embodiment 1. Preparation methods of different products are shown in Table 1, and product parameters are shown in Table 2.

### Method for preparing a positive electrode material in Embodiment 4:

A positive electrode active material LiFePO₄ with a volume average particle size Dv50 of 2 µm and a BET specific surface area of 10.5 m²/g and lithium hydroxide (with a volume average particle size Dv50 of 0.1 µm to 0.5 µm, LiOH content >99.0%, and Li₂CO₃<1%) accounting for 2.1% of the positive electrode active material were first mixed for 4 h to 6 h at a rotating speed of 300 rpm to 400 rpm in a high-speed cladding machine, and were roasted at 400°C to 800°C for 30 h to 40 h to form a lithium source-cladded lithium iron phosphate material, then, the lithium source-cladded lithium iron phosphate material was mixed with nickel oxide with a volume average particle size Dv50 of 2 µm to 4 µm and a BET specific surface area of 7.85 m²/g, and a mass ratio of nickel oxide to lithium hydroxide was 11:10, mixing was performed in the cladding machine at a rotating speed of 300 rpm to 400 rpm for 4 h to 6 h, and roasting was performed at 400°C to 800°C for 30 h to 65 h.

**Table 1: Raw materials and preparation methods adopted in Embodiments 1 to 26 and Comparative examples 1 to 2**

| | Positive electrode active material | | | Lithium supplement | | | Preparation method of positive electrode material |
|---|---|---|---|---|---|---|---|
| | Substance | Raw material Dv50 (µm) | Raw material BET (m^{2.}g) | Substance | Raw material Dv50 (µm) | Raw material BET (m^{2.}g) | |
| Embodiment 1 | LiFePO₄ | 2 | 10.5 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; and the pulverized lithium supplement and a positive electrode active material were put into a cladding machine to be uniformly mixed for 2 h to 3 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 2 | LiFePO₄ | 2 | 10.5 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; a positive electrode active material was pulverized for 5 h to 6 h by using the high-speed pulverizer at a rotating speed of 500 rpm to 600 rpm to acquire particles with a volume average particle size Dv50 of 0.1 µm to 0.5 µm; and the two kinds of pulverized materials were put into a cladding machine to be uniformly mixed for 3 h to 5 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 3 | LiFePO₄ | 2 | 10.5 | Li_{1.8}NiO₂ | 8 | 0.55 | Pulverized particles of a lithium supplement with a volume average particle size Dv50 of 8 nm to 10 nm were acquired according to the method in Embodiment 2; and a positive electrode active material was first put into a cladding machine to be treated for 1 h to 2 h at a rotating speed of 50 rpm to 100 rpm, then, the pulverized particles of the lithium supplement were put into the cladding machine to be uniformly mixed for 5 h to 8 h at a rotating speed of 100 rpm to 200 rpm, a mass ratio of the lithium supplement to the positive electrode active material was 2%, and roasting was performed at a temperature of 600°C to 1200°C for 30 h to 65 h. |
| Embodiment 4 | LiFePO₄ | 2 | 10.5 | Li_{1.8}NiO₂ | LiOH 0.1-0.5 | NiO 7.85 | Lithium hydroxide accounting for 2.1% of the mass of the positive electrode active material was first mixed for 4 h to 6 h in a high-speed cladding machine at a rotating speed of 300 rpm to 400 rpm, roasting was performed at 400°C to 800°C for 30 h to 40 h to form a lithium source-cladded lithium iron phosphate material, then, the lithium source-cladded lithium iron phosphate material was mixed with nickel oxide, a mass ratio of nickel oxide to lithium hydroxide was 11:10, mixing was performed for 4 h to 6 h in the cladding machine at a rotating speed of 300 rpm to 400 rpm, and roasting was performed at 400°C to 800°C for 30 h to 65 h. |
| | | | | | NiO 2-4 | | |
| Embodiment 5 | LiFePO₄ | 2 | 10.5 | Li_{1.8}NiO₂ | 8 | 0.55 | A lithium supplement was pulverized for 4 h to 7 h by using a high-speed pulverizer at a rotating speed of 600 rpm to 700 rpm to acquire particles with a volume average particle size Dv50 of 22 nm to 25 nm; and a positive electrode active material and the pulverized particles of the lithium supplement were put into a cladding machine to be mixed for 8 h to 10 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 6 | LiFePO₄ | 2 | 10.5 | Li_{1.8}NiO₂ | 8 | 0.55 | Pulverized particles of a lithium supplement with a volume average particle size Dv50 of 8 nm to 10 nm were acquired according to the method in Embodiment 2; and a positive electrode active material and the pulverized particles of the lithium supplement were put into a cladding machine to be mixed for 4 h to 6 h at a rotating speed of 300 rpm to 400 rpm, a mass ratio of the lithium supplement to the positive electrode active material was 1%, and roasting was performed at 600°C to 1200°C for 30 h to 65 h. |
| Embodiment 7 | LiFePO₄ | 2 | 10.5 | Li_{1.8}NiO₂ | 8 | 0.55 | Pulverized particles of a lithium supplement with a volume average particle size Dv50 of 8 nm to 10 nm were acquired according to the method in Embodiment 2; and a positive electrode material and the pulverized particles of the lithium supplement were put into a cladding machine to be mixed for 4 h to 6 h at a rotating speed of 300 rpm to 400 rpm, a mass ratio of the lithium supplement to the positive electrode active material was 5%, and roasting was performed at 600°C to 1200°C for 30 h to 65 h. |
| Embodiment 8 | LiFePO₄ | 2 | 10.5 | Li_{1.8}NiO₂ | 3 | 1.89 | A lithium supplement was pulverized for 3 h to 4 h by using a high-speed pulverizer at a rotating speed of 400 rpm to 500 rpm to acquire particles with a volume average particle size Dv50 of 8 nm to 10 nm; and a positive electrode active material and the pulverized particles of the lithium supplement were put into a cladding machine to be mixed for 4 h to 6 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 9 | LiFePO₄ | 2 | 10.5 | Li_{1.8}NiO₂ | 10 | 0.37 | A lithium supplement was pulverized for 7 h to 9 h by using a high-speed pulverizer at a rotating speed of 800 rpm to 900 rpm to acquire particles with a volume average particle size Dv50 of 8 nm to 10 nm; and a positive electrode active material and the pulverized particles of the lithium supplement were put into a cladding machine to be mixed for 4 h to 6 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 10 | LiFePO₄ | 2 | 10.5 | Li_{1.8}NiO₂ | 10 | 0.25 | A lithium supplement was pulverized for 7 h to 9 h by using a high-speed pulverizer at a rotating speed of 800 rpm to 900 rpm to acquire particles with a volume average particle size Dv50 of 8 nm to 10 nm; and a positive electrode active material and the pulverized particles of the lithium supplement were put into a cladding machine to be mixed for 4 h to 6 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 11 | LiFePO₄ | 2 | 10.5 | Li_{1.8}NiO₂ | 3 | 2.53 | A lithium supplement was pulverized for 3 h to 4 h by using a high-speed pulverizer at a rotating speed of 400 rpm to 500 rpm to acquire particles with a volume average particle size Dv50 of 8 nm to 10 nm; and the pulverized particles of the lithium supplement and conductive carbon (Sp) were mixed in a cladding machine for 4 h to 5 h at a rotating speed being 300 rpm to 400 rpm, then, a positive electrode active material and the lithium supplement cladded with the carbon were put into the cladding machine to be mixed for 4 h to 6 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 12 | LiFePO₄ | 0.5 | 10.9 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; and a positive electrode active material was first put into a cladding machine with a rotating speed of 50 rpm to 100 rpm to be treated for 4 h to 5 h to acquire particles with a volume average particle size Dv50 of 1.5 µm to 3 µm, then, the pulverized particles of the lithium supplement were put into the cladding machine to be uniformly mixed for 5 h to 8 h at a rotating speed of 100 rpm to 200 rpm, a mass ratio of the lithium supplement to the positive electrode active material was 2%, and roasting was performed at 600°C to 1200°C for 30 h to 65 h. |
| Embodiment 13 | LiFePO₄ | 5 | 5.9 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; a positive electrode active material was put into the high-speed pulverizer to be pulverized for 7 h to 10 h at a rotating speed of 500 rpm to 600 rpm to acquire particles with a volume average particle size Dv50 of 1 µm to 3 µm; and the two kinds of pulverized materials were put into a cladding machine to be uniformly mixed for 3 h to 5 h at a rotating speed of 300 rpm to 400 rpm, and roasting was performed at 600°C to 1200°C for 30 h to 65 h. |
| Embodiment 14 | LiFePO₄ | 5 | 1 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; a positive electrode active material was put into the high-speed pulverizer to be pulverized for 7 h to 10 h at a rotating speed of 500 rpm to 600 rpm to acquire particles with a volume average particle size Dv50 of 1 µm to 3 µm; and the two kinds of pulverized materials were put into a cladding machine to be uniformly mixed for 3 h to 5 h at a rotating speed of 300 rpm to 400 rpm, and roasting was performed at 600°C to 1200°C for 30 h to 65 h. |
| Embodiment 15 | LiFePO₄ | 2 | 10.5 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; a positive electrode active material was pulverized for 6 h to 9 h by using the high-speed pulverizer at a rotating speed of 600 rpm to 700 rpm to acquire particles with a volume average particle size Dv50 of 1 µm to 2 µm; and the two kinds of pulverized materials were put into a cladding machine to be uniformly mixed for 3 h to 5 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 16 | LiFePO₄ | 2 | 10.5 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; and a positive electrode active material was first put into a cladding machine to be treated for 6 h to 8 h at a rotating speed of 50 rpm to 60 rpm to acquire particles with a volume average particle size Dv50 of 10 µm, then, the pulverized particles of the lithium supplement were put into a cladding machine to be uniformly mixed for 5 h to 8 h at a rotating speed of 100 rpm to 200 rpm, a mass ratio of the lithium supplement to the positive electrode active material was 2%, and roasting was performed at 600°C to 1200°C for 30 h to 65 h. |
| Embodiment 17 | LiFePO₄ | 2 | 10.5 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; and a positive electrode active material and the pulverized particles of the lithium supplement were put into a cladding machine to be mixed for 4 h to 6 h at a rotating speed of 300 rpm to 400 rpm, a mass ratio of the lithium supplement to the positive electrode active material was 0.5%, and roasting was performed at 600°C to 1200°C for 30 h to 65 h. |
| Embodiment 18 | LiFePO₄ | 2 | 10.5 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; and a positive electrode active material and the pulverized particles of the lithium supplement were put into a cladding machine to be mixed for 4 h to 6 h at a rotating speed of 300 rpm to 400 rpm, a mass ratio of the lithium supplement to the positive electrode active material was 8%, and roasting was performed at 600°C to 1200°C for 30 h to 65 h. |
| Embodiment 19 | LiFePO₄ | 2 | 10.5 | Li_{1.8}NiO₂ | 8 | 0.55 | The same as Embodiment 1. |
| Embodiment 20 | LiFe_{0.4}Mn _{0.6}PO₄ | 1 | 16 | Li_{1.8}NiO₂ | 8 | 0.55 | A lithium supplement was pulverized for 5 h to 8 h by using a high-speed pulverizer at a rotating speed of 700 rpm to 800 rpm to acquire particles with a volume average particle size Dv50 of 8 nm to 10 nm; a positive electrode active material was dispersed for 3 h to 4 h by using a dispersing machine at a rotating speed of 200 rpm to 300 rpm; and the pulverized lithium supplement and the positive electrode active material were put into a cladding machine to be uniformly mixed for 2 h to 3 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 21 | LiFePO₄ | 2 | 10.5 | Li_{1.8}MnO₂ | 8 | 0.35 | A lithium supplement was pulverized for 5 h to 8 h by using a high-speed pulverizer at a rotating speed of 700 rpm to 800 rpm to acquire particles with a volume average particle size Dv50 of 8 nm to 10 nm; and the pulverized lithium supplement and a positive electrode active material were uniformly mixed in a cladding machine for 2 h to 3 h at a rotating speed of 300 rpm to 400 rpm, a mass ratio of the lithium supplement to the positive electrode active material was 2%, and roasting was performed at 600°C to 1200°C for 30 h to 65 h. |
| Embodiment 22 | LiFe_{0.99}Ti_{0. 005} V_{0.005} P O₄ | 2 | 10.5 | Li_{1.8}NiO₂ | 8 | 0.55 | Except for the difference in the positive electrode active material, the rest was the same as that in Embodiment 1. |
| Embodiment 23 | LiFe_{0.99}V_{0. 01}PO₄ | 2 | 10.5 | Li_{1.8}NiO₂ | 8 | 0.55 | Except for the difference in the positive electrode active material, the rest was the same as that in Embodiment 1. |
| Embodiment 24 | LiFe_{0.99}Ti_{0. 01}PO₄ | 2 | 10.5 | Li_{1.8}NiO₂ | 8 | 0.55 | Except for the difference in the positive electrode active material, the rest was the same as that in Embodiment 1. |
| Embodiment 25 | LiFePO₄ | 2 | 10.5 | Li₂Cu_{0.6}Ni _{0.4}O₂ | 8 | 0.55 | Except for the difference in the lithium supplement, the rest was the same as that in Embodiment 1. |
| Embodiment 26 | LiFePO₄ | 2 | 10.5 | Li₆CoO₄ | 8 | 0.55 | Except for the difference in the lithium supplement, the rest was the same as that in Embodiment 1. |
| Comparative example 1 | LiFePO₄ | 2 | 10.5 | Li₂NiO₂ | 8 | 0.55 | Except for the difference in the lithium supplement, the rest was the same as that in Embodiment 1. |
| Comparative example 2 | LiFePO₄ | 2 | 10.5 | Li_{1.8}NiO₂ | 8 | 0.55 | A lithium supplement and a positive electrode active material were directly mixed, and a mass ratio of the lithium supplement to the positive electrode active material was 2%. |

**Table 2: Parameters of Embodiments 1 to 26 and Comparative examples 1 to 2**

| Serial number | Positive electrode active material | Lithium supplement | Average diameter (µm) of core | Average thickness (nm) of cladding layer | Mass ratio of lithium supplement to positive electrode active material | BET (m2/g) of positive electrode material | Charging and discharging voltage interval (V) |
|---|---|---|---|---|---|---|---|
| Embodiment 1 | LiFePO₄ | Li_{1.8}NiO₂ | 3 | 15 | 2% | 9.7 | 2.0-3.7 |
| Embodiment 2 | LiFePO₄ | Li_{1.8}NiO₂ | 1 | 15 | 2% | 10.7 | 2.0-3.7 |
| Embodiment 3 | LiFePO₄ | Li_{1.8}NiO₂ | 10 | 15 | 2% | 7.9 | 2.0-3.7 |
| Embodiment 4 | LiFePO₄ | Li_{1.8}NiO₂ | 3 | 10 | 2% | 10.3 | 2.0-3.7 |
| Embodiment 5 | LiFePO₄ | Li_{1.8}NiO₂ | 3 | 30 | 2% | 9.1 | 2.0-3.7 |
| Embodiment 6 | LiFePO₄ | Li_{1.8}NiO₂ | 3 | 15 | 1% | 10.1 | 2.0-3.7 |
| Embodiment 7 | LiFePO₄ | Li_{1.8}NiO₂ | 3 | 15 | 5% | 10 | 2.0-3.7 |
| Embodiment 8 | LiFePO₄ | Li_{1.8}NiO₂ | 3 | 15 | 2% | 9.8 | 2.0-3.7 |
| Embodiment 9 | LiFePO₄ | Li_{1.8}NiO₂ | 3 | 15 | 2% | 9.8 | 2.0-3.7 |
| Embodiment 10 | LiFePO₄ | Li_{1.8}NiO₂ | 3 | 15 | 2% | 9.8 | 2.0-3.7 |
| Embodiment 11 | LiFePO₄ | Li_{1.8}NiO₂ | 3 | 15 | 2% | 9.8 | 2.0-3.7 |
| Embodiment 12 | LiFePO₄ | Li_{1.8}NiO₂ | 3 | 15 | 2% | 10.2 | 2.0-3.7 |
| Embodiment 13 | LiFePO₄ | Li_{1.8}NiO₂ | 3 | 15 | 2% | 5.79 | 2.0-3.7 |
| Embodiment 14 | LiFePO₄ | Li_{1.8}NiO₂ | 3 | 15 | 2% | 0.99 | 2.0-3.7 |
| Embodiment 15 | LiFePO₄ | Li_{1.8}NiO₂ | 0.7 | 15 | 2% | 11.1 | 2.0-3.7 |
| Embodiment 16 | LiFePO₄ | Li_{1.8}NiO₂ | 12 | 15 | 2% | 7.1 | 2.0-3.7 |
| Embodiment 17 | LiFePO₄ | Li_{1.8}NiO₂ | 3 | 15 | 0.50% | 10.4 | 2.0-3.7 |
| Embodiment 18 | LiFePO₄ | Li_{1.8}NiO₂ | 3 | 15 | 8% | 8.6 | 2.0-3.7 |
| Embodiment 19 | LiFePO₄ | Li_{1.8}NiO₂ | 3 | 15 | 2% | 9.7 | 2.0-4.2 |
| Embodiment 20 | LiFe0.4Mn0.6PO4 | Li_{1.8}NiO₂ | 3 | 15 | 2% | 10.5 | 2.0-3.7 |
| Embodiment 21 | LiFePO₄ | Li_{1.8}MnO₂ | 3 | 15 | 2% | 9.5 | 2.0-3.7 |
| Embodiment 22 | LiFe0.99Ti0.005V0.005PO4 | Li_{1.8}NiO₂ | 3 | 15 | 2% | 9.7 | 2.0-3.7 |
| Embodiment 23 | LiFe0.99V0.01PO4 | Li_{1.8}NiO₂ | 3 | 15 | 2% | 9.7 | 2.0-3.7 |
| Embodiment 24 | LiFe0.99Ti0.01PO4 | Li_{1.8}NiO₂ | 3 | 15 | 2% | 9.7 | 2.0-3.7 |
| Embodiment 25 | LiFePO₄ | Li2Cu0.6Ni0.4O2 | 3 | 15 | 2% | 9.7 | 2.0-3.7 |
| Embodiment 26 | LiFePO₄ | Li6CoO4 | 3 | 15 | 2% | 9.7 | 2.0-3.7 |
| Comparative example 1 | LiFePO₄ | Li₂NiO₂ | 3 | 15 | 2% | 9.7 | 2.0-3.7 |
| Comparative example 2 | LiFePO₄ | Li_{1.8}NiO₂ | | | 2% | / | 2.0-3.7 |

### Material test and battery test

### (1) Test on average diameter of core and average thickness of cladding layer:

The positive electrode material was tested by using TEM. The core and the cladding layer of a single material particle had different crystal lattices under the TEM, so that interfaces of the core and the cladding layer might be observed. In combination with mapping (software of the TEM), a diameter of the core and a thickness of the cladding layer of the single material particle were measured, and 50 to 60 material particles were totally measured, and an average value of the diameters of the cores and an average value of the thicknesses of the cladding layers of all the material particles were calculated to acquire the average diameter of the core and the average thickness of the cladding layer.

### (2) Test on volume average particle size Dv50:

According to GB/T 19077-2016 *Particle Size Distribution-Laser Diffraction Methods*, determination was performed by using a Mastersizer 2000E laser particle size analyzer of Malvern Instruments Co., Ltd, UK.

### (3) Test on BET specific surface area:

The standard GB/T19587-2004, *Determination of The Specific Surface Area of Solids By Gas Adsorption Using The BET Method* was taken as a reference for the test method.

8 g to 15 g of a sample to be tested was charged into a sample tube, and an initial mass of the sample to be tested was recorded. The weighed sample to be tested was charged into a specific surface area analyzer TRISTAR II 3020, then, degassing was started, the sample to be tested was heated to 200°C and kept for 2 h, and then, a mass of the sample to be tested after degassing was recorded. Then, the sample to be tested after degassing was charged into a device again, and liquid nitrogen was poured into the device for BET test. A nitrogen gas pressure was set to 0.08 MPa to 0.12 MPa. After the test was completed, the BET specific surface area was calculated from a test result.

### (4) Test on first delithiation quantity of positive electrode plate:

A positive electrode plate and a lithium metal sheet formed a button battery, and the button battery was charged to 3.7 V from 2.0 V at 0.1 C to acquire a first charging capacity. A ratio of the first charging capacity to the mass of the positive electrode material was used as a first delithiation quantity.

### (5) Test on first coulombic efficiency of positive electrode material:

A positive electrode plate and a lithium metal sheet formed a button battery, and the button battery was charged to 3.7 V from 2.0 V at 0.1 C to acquire a first charging capacity. Then, the button battery was discharged from 3.7 V to 2.0 V at 0.1 C to acquire a first discharging capacity. A ratio of the first discharging capacity to the first charging capacity was the first coulombic efficiency of the positive electrode material.

### (6) Test on specific capacity of secondary battery:

A secondary battery was charged to 3.65 V from 2.0 V at 0.1 C, then discharged to 2.0 V at 0.1 C, subjected to still standing for 5 min, and then discharged to 2.0 V at 0.05 C, and an acquired discharging capacity was the capacity of the secondary battery. A value obtained by dividing the discharging capacity by the mass of the positive electrode material of the secondary battery was the specific capacity of the secondary battery.

### (7) Test on cycling capacity retention rate of secondary battery:

In a 60°C constant-temperature environment, a secondary battery was charged to 3.65 V from 2.0 V at 0.1 C, then charged to 0.05 C at a constant voltage of 3.65 V, discharged to 2.0 V at 1 C, subjected to still standing for 5 min, and then discharged to 2.0 V at 0.05 C to acquire a discharging capacity. The charging and discharging cycling was performed according to the above process, the cycling was totally performed for 1000 times, and a cycling capacity retention rate after 1000 times of cycling might be acquired by dividing the discharging capacity of the last time of cycling by the discharging capacity of the third cycle.

Reference secondary battery: a positive electrode material of a reference secondary battery corresponding to each embodiment or each comparative example only used LiFePO₄, the total weight of the positive electrode material was the same as that in the embodiment or the comparative example, and the rest was the same as that in the embodiment or the comparative example. The cycling capacity retention rate after 1000 times of cycling of the reference secondary battery was measured according to the above method.

An improvement value of the cycling capacity retention rate was acquired by subtracting the cycling capacity retention rate after 1000 times of cycling of the reference secondary battery from the cycling capacity retention rate after 1000 times of cycling of the secondary battery.

**Table 3: Performance test results of Embodiments 1 to 26 and Comparative examples 1 to 2**

| Serial number | 0.1 C first delithiation quantity (mAh/g) of button battery on lithium metal half battery | 0.05 C 2.0 V specific capacity (mAh/g) of full battery | In comparison to reference secondary battery, improvement of 0.05 C 60°C capacity retention rate of experimental group | First coulombic efficiency of button battery on lithium metal half battery |
|---|---|---|---|---|
| Embodiment 1 | 161.86 | 149.85 | 4.35% | 0.9329 |
| Embodiment 2 | 162.37 | 150.32 | 4.33% | 0.93 |
| Embodiment 3 | 160.82 | 148.89 | 4.38% | 0.9389 |
| Embodiment 4 | 162.16 | 150.13 | 4.34% | 0.9312 |
| Embodiment 5 | 161.24 | 149.27 | 4.36% | 0.9365 |
| Embodiment 6 | 160.93 | 148.99 | 2.19% | 0.9383 |
| Embodiment 7 | 164.64 | 150.8 | 10.5% | 0.9172 |
| Embodiment 8 | 162.27 | 150.23 | 4.34% | 0.9306 |
| Embodiment 9 | 161.65 | 149.66 | 4.35% | 0.9341 |
| Embodiment 10 | 161.96 | 14994 | 4.35% | 0.9323 |
| Embodiment 11 | 162.06 | 150.04 | 4.34% | 0.9317 |
| Embodiment 12 | 162.16 | 150.13 | 4.34% | 0.9312 |
| Embodiment 13 | 153.92 | 142.5 | 14.52% | 0.9613 |
| Embodiment 14 | 145.73 | 134.91 | 15.95% | 0.9675 |
| Embodiment 15 | 162.37 | 150.48 | 3.16% | 0.936 |
| Embodiment 16 | 160.12 | 147.59 | 3.85% | 0.924 |
| Embodiment 17 | 160.46 | 148.56 | 0.89% | 0.941 |
| Embodiment 18 | 158.98 | 146.56 | 12.8% | 0.931 |
| Embodiment 19 | 166.89 | 151.01 | 2.75% | 0.9047 |
| Embodiment 20 | 147.57 | 136.21 | 4.68% | 0.911 |
| Embodiment 21 | 162.26 | 149.76 | 4.04% | 0.919 |
| Embodiment 22 | 160.48 | 149.05 | 4.15% | 0.949 |
| Embodiment 23 | 160.26 | 148.94 | 4.10% | 0.938 |
| Embodiment 24 | 160.36 | 149.01 | 4.13% | 0.941 |
| Embodiment 25 | 160.82 | 149.55 | 4.18% | 0.928 |
| Embodiment 26 | 164.94 | 151.52 | 6.56% | 0.9204 |
| Comparative example 1 | 161.13 | 149.18 | 1.85% | 0.9371 |
| Comparative example 2 | 161.02 | 149.08 | 3.89% | 0.9372 |

### From Table 1 to Table 3, it can be learned that:

Compared with Comparative example 1 that using Li₂NiO₂ as the lithium supplement, Embodiment 1 of the present application has the advantages of higher first delithiation quantity of the positive electrode material, higher energy density of the cell, and longer cycling life of the battery.

Compared with Comparative example 2 that directly mixing the lithium supplement with the positive electrode active material, Embodiments 1 to 5, and 8 to 14 of the present application have the advantage of longer cycling life of the battery.

Compared with Embodiment 15 that using a smaller average diameter of the core, Embodiments 1 to 3, and 8 to 14 of the present application have the advantage of longer cycling life of the battery. Compared with Embodiment 16 that using a larger average diameter of the core, Embodiments 1 to 3 of the present application have the advantages of higher first delithiation quantity of the positive electrode material, higher energy density of the cell, longer cycling life of the battery, and higher first coulombic efficiency.

Compared with Embodiment 17 that using a lower mass ratio of the lithium supplement to the positive electrode active material, Embodiments 1 and 6 to 7 of the present application have the advantages of higher first delithiation quantity of the positive electrode material, higher energy density of the cell, and longer cycling life of the battery. Compared with Embodiment 18 that using a higher mass ratio of the lithium supplement to the positive electrode active material, Embodiments 1 and 6 to 7 of the present application have the advantages of higher first delithiation quantity of the positive electrode material and higher energy density of the cell.

Compared with Embodiment 19 that using a charging and discharging voltage interval of 2.0 V to 4.2 V, Embodiment 1 of the present application has the advantages of longer cycling life of the battery and higher first coulombic efficiency.

It should be noted that the present application is not limited to the above implementations. The above implementations are merely exemplary, and implementations having substantially the same technical idea and the same effects within the scope of the technical solution of the present application are all included in the technical scope of the present application. In addition, other implementations constructed by applying various modifications conceivable to those skilled in the art to the implementations and combining some of the constituent elements of the implementations without departing from the scope of the essence of the present application are also included in the scope of the present application.

## Claims

1. A positive electrode material for a lithium secondary battery, comprising a matrix and a modifier disposed on a surface of the matrix; the matrix comprising LiₓAₛMn₁₋ₛP_{1-z}E_{z}O₄, wherein 0<x≤1.1, 0<s≤1, 0≤z≤0.1, A comprises one or more elements of Ti, V, Zr, Fe, Ni, Mg, Co, Ga, Sn, Sb, Nb, and Ge, and E comprises one or more elements of B (boron), S, Si, and N; and the modifier comprising Li_{y}MO_{d}, wherein 1<y≤6, 1<d≤4, M comprises one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

2. The positive electrode material according to claim 1, comprising a core and a cladding layer cladding the core; the core comprising LiₓAₛMn₁₋ₛP_{1-z}E_{z}O₄, wherein 0<x≤1.1, 0<s≤1, 0≤z≤0.1, A comprises one or more elements of Ti, V, Zr, Fe, Ni, Mg, Co, Ga, Sn, Sb, Nb, and Ge, and E comprises one or more elements of B (boron), S, Si, and N; and the cladding layer comprising Li_{y}MO_{d}, wherein 1<y≤6, 1<d≤4, M comprises one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

3. The positive electrode material according to claim 1 or 2, wherein the modifier or the cladding layer comprises one or more of Li_{y}MnO₂, Li_{y}NbO₄, Li_{y}FeO₄, Li_{y}CoO₄, Li_{y}NiO₂, Li_{y}CuO₂, and Li_{y}Cuₓ₁Ni_{1-x1-y1}M'_{y1}O₂, wherein y is respectively and independently greater than 1 but smaller than or equal to 6, 0<x1<1, 0≤y1<0.1, and M' comprises one or more elements of Zn, Sn, Mg, Fe, and Mn; and
optionally, the modifier or the cladding layer comprises one or two of Li_{1.8}MnO₂, Li₆CoO₄, Li_{y}NiO₂, and Li₂Cu_{0.6}Ni_{0.4}O₂.

4. The positive electrode material according to any one of claims 1 to 3, wherein the matrix or the core comprises LiₓDₛ₁Feₛ₂Mn₁₋ₛ₁₋ₛ₂PO₄, wherein 0<x≤1, s1≥0, s2>0, and 0<s1+s2≤1; D comprises one or more elements of Ti, V, Zr, Ni, Mg, Co, Ga, Sn, Sb, Nb, and Ge, and optionally comprises one or two elements of Ti and V; and the modifier or the cladding layer comprises Li_{y}NiO₂, wherein 1<y<2.

5. The positive electrode material according to any one of claims 1 to 4, wherein an average diameter of the matrix or the core is 0.7 µm to 12 µm, and is optionally 1 µm to 10 µm; and/or
an average thickness of the modifier or the cladding layer is 10 nm to 30 nm, and is optionally 10 nm to 15 nm.

6. The positive electrode material according to any one of claims 1 to 5, wherein a mass ratio of Li_{y}MO_{d} to LiₓAₛMn₁₋ₛP_{1-z}E_{z}O₄ is 0.5% to 8%, and is optionally 1% to 5%.

7. The positive electrode material according to any one of claims 1 to 6, wherein
a BET specific surface area of the positive electrode material is 0.9 m²/g to 11.1 m²/g, and is optionally 7 m²/g to 10.7 m²/g.

8. The positive electrode material according to any one of claims 1 to 7, wherein the modifier or the cladding layer further comprises a carbonaceous material, and the carbonaceous material clads a surface of Li_{y}MO_{d}; and/or
the matrix or the core further comprises a carbonaceous material, the carbonaceous material clads a surface of LiₓAₛMn₁₋ₛP_{1-z}C_{z}O₄; and/or the carbonaceous material comprises one or more of conductive carbon, graphene, and carbon nanotubes.

9. A method for preparing a positive electrode material for a lithium secondary battery, being Method 1 or Method 2, wherein
the Method 1 comprises:
mixing LiₓAₛMn₁₋ₛP_{1-z}E_{z}O₄ with Li_{y}MO_{d}, and performing roasting to acquire the positive electrode material for a lithium secondary battery; and
the Method 2 comprises:
mixing LiₓAₛMn₁₋ₛP_{1-z}E_{z}O₄ with any one of a lithium source and an M element source, and performing roasting to acquire an intermediate product; and
mixing the intermediate product with the other one of the lithium source and the M element source, and performing roasting to acquire the positive electrode material for a lithium secondary battery, wherein
the positive electrode material for a lithium secondary battery comprises a core and a cladding layer cladding the core; the core comprises LiₓAₛMn₁₋ₛP_{1-z}E_{z}O₄, wherein 0<x≤1.1, 0<s≤1, 0≤z≤0.1, A comprises one or more elements of Ti, V, Zr, Fe, Ni, Mg, Co, Ga, Sn, Sb, Nb, and Ge, and E comprises one or more elements of B (boron), S, Si, and N; and the cladding layer comprises Li_{y}MO_{d}, wherein 1<y≤6, 1<d≤4, M comprises one or more elements of Ni, Co, Fe, Mn, Zn, Mg, Ca, Cu, Sn, Mo, Ru, Ir, V, Nb, and Cr, and a valence state of at least one metallic element in M is lower than a highest oxidation valence state of M.

10. The method according to claim 9, wherein in the Method 1,
a Dv50 particle size of Li_{y}MO_{d} is 8 nm to 25 nm, and is optionally 8 nm to 10 nm; and/or
a Dv50 particle size of LiₓAₛMn₁₋ₛP_{1-z}E_{z}O₄ is 0.1 µm to 10 µm, and is optionally 0.5 µm to 5 µm; and/or
a mass ratio of Li_{y}MO_{d} to LiₓAₛMn₁₋ₛP_{1-z}E_{z}O₄ is 0.5% to 8%, and is optionally 1% to 5%; and/or
a roasting temperature is 400°C to 1200°C, and is optionally 600°C to 1200°C; and/or
a roasting time is 30 h to 65 h; and/or
mixing is performed through a cladding machine, and is performed at a rotating speed of 50 rpm to 400 rpm; and/or
a mixing time is 3 h to 10 h; and/or
the Method 1 further comprises: before mixing, cladding Li_{y}MO_{d} and/or LiₓAₛMn₁₋ₛP_{1-z}E_{z}O₄ with a carbonaceous material; and/or
the carbonaceous material comprises one or more of conductive carbon, graphene, and carbon nanotubes.

11. The method according to claim 9, wherein in the Method 2,
the lithium source comprises one or more of lithium hydroxide, lithium oxide, and lithium carbonate; and/or
the M element source comprises one or more of a hydroxide, a sulfate, a nitrate, a chloride, and an oxide of the M element; and/or
a roasting temperature is respectively and independently 400°C to 800°C; and/or
a roasting time is respectively and independently 30 h to 65 h; and/or
mixing is performed through a cladding machine, and a rotating speed adopted for mixing is respectively and independently 300 rpm to 400 rpm; and/or
a mixing time is respectively and independently 4 h to 6 h.

12. A positive electrode plate, comprising the positive electrode material according to any one of claims 1 to 8 or a positive electrode material prepared by the method according to any one of claims 9 to 11.

13. A secondary battery, comprising the positive electrode plate according to claim 12.

14. The secondary battery according to claim 13, wherein a charging upper limit voltage of the secondary battery is 3.65 V to 3.85 V; and optionally, a discharging lower limit voltage of the secondary battery is 2.0 V to 2.5 V.

15. A power consuming apparatus, comprising the secondary battery according to claim 13 or 14.

16. A method of using a secondary battery, wherein charging is performed by using an upper limit voltage in a range of 3.65 V to 3.85 V, and optionally, discharging is performed at a lower limit voltage in a range of 2.0 V to 2.5 V, wherein the secondary battery comprises the positive electrode plate according to claim 12.
